# EUROPÄISCHE PATENTSCHRIFT

(11) **EP 0 863 489 B1**
(45) Veröffentlichungstag und Bekanntmachung des Hinweises auf die Patenterteilung: **03.12.2003**
(21) Anmeldenummer: 98103686.6
(22) Anmeldetag: 03.03.1998
(51) Int. Cl.: G07C 1/26, G07B 13/02, G09F 3/03

(54) **Transponder für eine Plombe für ein zweiteiliges Gehäuse**
Transponder for a seal for a housing in two parts
Transpondeur pour un plomb destiné à un boîtier en deux parts

(30) Priorität: 07.03.1997 DE 19709364
(43) Veröffentlichungstag der Anmeldung: 09.09.1998
(73) Patentinhaber: Motz Computer Service & Vertriebs GmbH, 37671 Höxter (DE)
(72) Erfinder: Maul, Ludwig, Dipl.-Ing. (FH), 92237 Sulzbach-Rosenberg (DE)
(74) Vertreter: Menges, Rolf, Dipl.-Ing.

(56) Entgegenhaltungen:
- EP-A- 0 128 672
- EP-A- 0 540 376
- WO-A-88/08176
- DE-A- 3 147 520
- DE-A- 4 238 225
- DE-A- 19 720 747
- FR-A- 2 688 924
- US-A- 3 806 874

## Beschreibung

Die Erfindung betrifft Verfahren zur Verwendung eines Transponders für eine Plombe für ein zweiteiliges Gehäuse nach den unabhängigen Patentansprüchen 1 und 3 und zweiteilige Gehäuse mit einer Plombe gemäß dem Oberbegriff der unabhängigen Patentansprüche 9 und 11.

Bei dem Gehäuse kann es sich um ein zwei- oder mehrschaliges oder beispielsweise um ein topfförmiges Gehäuse mit einem Schiebe- oder Klappdeckel handeln. Herkömmliche Plomben sind als siegelförmige Klebeetiketten ausgeführt, welche, die Teilungsfuge zwischen den beiden einander benachbarten und relativ zueinander beweglichen Gehäuseteilen überbrückend, auf die Wandung geklebt werden. Dadurch werden sie beim gegenseitigen Verlagern der Gehäuseteile zum Öffnen des Gehäuses in der Umgebung dieser Fuge sichtbar zerstört. Allerdings besteht die Gefahr der Manipulation durch unautorisiertes Öffnen des Gehäuses, indem dann die Reste des Klebesiegels beiderseits der Trennfuge entfernt und die beiden Gehäuseteile wieder zusammensetzt werden, woraufhin das so wieder geschlossene Gehäuse mit einem frischen Klebesiegel über der Trennfuge ausgestattet werden kann. Die seinerzeitige (wahrscheinlich unbefugte) Öffnung des Geräte-Gehäuses ist danach nicht mehr erkennbar.

Aus der mechanischen Messgerätetechnik bekannt sind auch Bleiplomben zum Verbinden zweier Enden eines Plombendrahtes, der U- oder O-förmig durch koaxiale Löcher in übereinanderliegenden Flanschen an den Gehäuseteilen oder durch ein Querloch in einem Stehbolzen verläuft, welcher an einem Gehäuseteil befestigt ist und das andere Gehäuseteil mit frei zugänglichem Querloch für den Plombendraht durchragt. Auch hier sind nachträglich Manipulationen nicht mehr erkennbar, die darauf beruhten, die Plombe zum unautorisierten Öffnen des Gehäuses aufzuschneiden und später nach dem Wieder-Schließen des Gehäuses durch eine unrechtmäßig beschaffte frische Plombe zu ersetzen.

Bei den geteilten Gehäusen kann es sich um solche von Geräten zum Messen und Speichern von Verbrauchs- oder Betriebsdaten wie etwa im Falle von Versorgungsenergie (Strom- oder Wasserzähler) oder von Fahrzeugbewegungen (Fahrtenschreiber) handeln oder um codierte Femsteuersender wie bei einem Fernwirksystem zum Öffnen von Türen mit hierarchisch geregelter Zugangsberechtigung oder aber um ein Lesegerät zum Erfassen von mittels Kennungsträgem individualisierten Lebewesen oder Sachen wie in der Tierzucht oder zur Steuerung eines automatisierten Produktionsablaufes. Bevorzugt ist hier an ein sogenanntes Taubensport-Konstatiergerät gedacht, in dem Taubenidentnummern und Ankunftsechtzeiten einander zugeordnet zwischengespeichert werden, um sie danach in einen Ergebnisrechner zur Preislistenerstellung zu überspielen, wie etwa in der EP-B-0544277 in Verbindung mit EP-A-0582138 näher erläutert.

Die DE 31 47 520 A zeigt einen Stand der Technik, von dem die unabhängigen Ansprüche 9 und 11 im Oberbegriff ausgehen. Dieses Dokument beschreibt eine Versiegelungshülse, die es gestattet, Elektrizitätszähler oder andere Messgeräte oder Hilfseinrichtungen besser als mit üblichen Drahtplomben gegen unbefugten Eingriff zu schützen. Um gewisse Nachteile der Drahtplomben zu vermeiden, wird eine Hülse vorgeschlagen, die unter die Befestigungsschraube für die Kappe der zu versiegelnden Geräte geschoben wird. Die Hülse ist so geformt, dass die verwendete Plombierschraube, mit der die Geräte verschlossen sind, nicht herausgedreht zu werden braucht und nach Anziehen dieser Schraube eine Entfernung der Hülse nicht mehr möglich ist. Die Hülse gewährleistet Verdrehsicherheit. Verschlossen wird sie entweder durch eine geeignete Masse, die mit einem Prägestempel versiegelt wird, oder durch Einkleben eines geprägten Verschlussplättchen aus Papier oder Kunststoff oder durch ein geeignetes Formstück aus Kunststoff, das später nur durch Zerstören wieder entfernt werden kann. Auch hier handelt es sich um eine rein mechanische Schutzvorrichtung, die wohl eine Verdrehsicherheit bietet, aber keine Identifizierung erlaubt.

Transponder sind an sich bekannt. Zum Beispiel betrifft die DE 42 38 225 A eine Vorrichtung zur Befestigung eines Transponders mit Datenspeicher an einem mittels des Transponders zu kennzeichnenden Gegenstand, bei welcher Vorrichtung der Transponder in einem aus Gehäuseunterteil und Deckel bestehenden separaten Gehäuse untergebracht ist und dieses Gehäuse in einer Aufnahmeeinrichtung des Gegenstands untergebracht und am Gegenstand befestigt ist.

In allen Fällen beruht die Daten- und die Funktionssicherheit eines Gerätes darauf, dass kein unbefugter Eingriff in das Gehäuse zur Manipulation seines Datenbestandes stattfinden kann.

Der Erfindung liegt die technische Problematik zugrunde, Verfahren und ein Gehäuse der eingangs genannten Art zu schaffen, die ein unbemerktes Öffnen des Gehäuses unmöglich machen und gegebenenfalls auch weitere effiziente Datensicherungsmöglichkeiten ohne großen apparativen Zusatzaufwand eröffnen.

Diese Aufgabe ist erfindungsgemäß durch Verfahren gemäß den unabhängigen Ansprüchen 1 und 3 bzw. durch Gehäuse gemäß den unabhängigen Ansprüchen gelöst.

Wenn der Transponder, die Teilungsfuge überbrückend oder die Spannschraube sichernd, hermetisch in Kunststoff-Material der Gehäuse-Wandung eingeklebt wurde, ergeben sich beim Versuch des chemischen Herauslösens oder mechanischen Aufbohrens zum Öffnen des Gehäuses äußerlich auffallende, irreversible Beschädigungen der Gehäusewand. Außerdem werden bei Verwendung eines Transponders mit mechanisch empfindlichem Ferritkern mit dessen nicht minder empfindlichen elektrischen Komponenten (dünndrahtige Antennenspule und Halbleiter-Speicherchip) zerstört, wenn das Gehäuse längs seiner Teilungsfuge gewaltsam geöffnet wird oder wenn der Versuch gemacht wird, den Transponder chemisch oder mechanisch aus seiner die Fuge überbrückenden oder die Spannschraube sichernden Verriegelungsstellung freizulegen. Der mit dieser unveränderbaren Identnummer nur einmal existente Transponder ist nach seiner Zerstörung nicht mehr ersetzbar, d. h. der nachträgliche Einbau eines anderen Transponders würde infolge einer anderen Identnummer auffallen, weil jene dann nicht mehr zur bei der Herstellung archivierten Paarung zwischen der Seriennummer auf dem Typenschild des Geräte-Gehäuses und seiner in die Gehäusewand integrierten Plomben-Identnummer passt. In einem solchen Falle kann das Gerät als manipulationsverdächtig aus dem Verkehr gezogen werden.

Vorzugsweise wird der im internen Speicher im Gerät oder im Plomben-Speicher niedergelegten Paarung von Plomben-Identnummer und Geräte-Seriennummer für den konkreten Einsatzfall noch eine vorzugsweise gemäß EP-A-0758 119 intern aktuell auf Zufallsbasis erzeugte Einsatznummer zugeordnet, die auch bei der Ablieferung des Datenbestandes nach dem Einsatz noch unverändert im Speicher vorhanden sein muss, um die außerdem darin zwischengespeicherten aktuellen Daten danach überhaupt zur Auswertung auslesen zu können.

So ist das Gehäuse eindeutig und irreversibel durch die Zuordnung seiner bei der Herstellung vergebenen Geräte-Seriennummer zu der nach der Montage vergebenen, absolut einmaligen Transponder-Identnummer individualisiert; und zusätzlich zu dieser ab Fabrik feststehenden Paarung während des datenkritischen Einsatzes vorübergehend auch noch durch eine aktuell zufallsgesteuert generierte Einsatznummer, von der eine aus einem früheren Einsatz verbliebene Zufallsnummer aktuell überschrieben wird.

Vorteilhafte Ausgestaltungen der Verfahren und Gehäuse nach der Erfindung bilden die Gegenstände der abhängigen Ansprüche.

Ausführungsbeispiele der Erfindung werden im Folgenden unter Bezugnahme auf die Zeichnung näher beschrieben. In der Zeichnung zeigt jeweils in abgebrochener Längsschnittdarstellung:
- Fig. 1: ein Gehäuse mit einem quer zur Wandung eine Teilungsfuge überbrückenden Transponder,
- Fig. 2: ein Gehäuse mit parallel zur Wandung eine Teilungsfuge überbrückender und durch einen Transponder gesicherter Spannschraube, und
- Fig.3: stark vergrößert einen Ferritstab-Transponder mit Antennenspule und teilbereichsweise beschreibbarem Speicherchip.

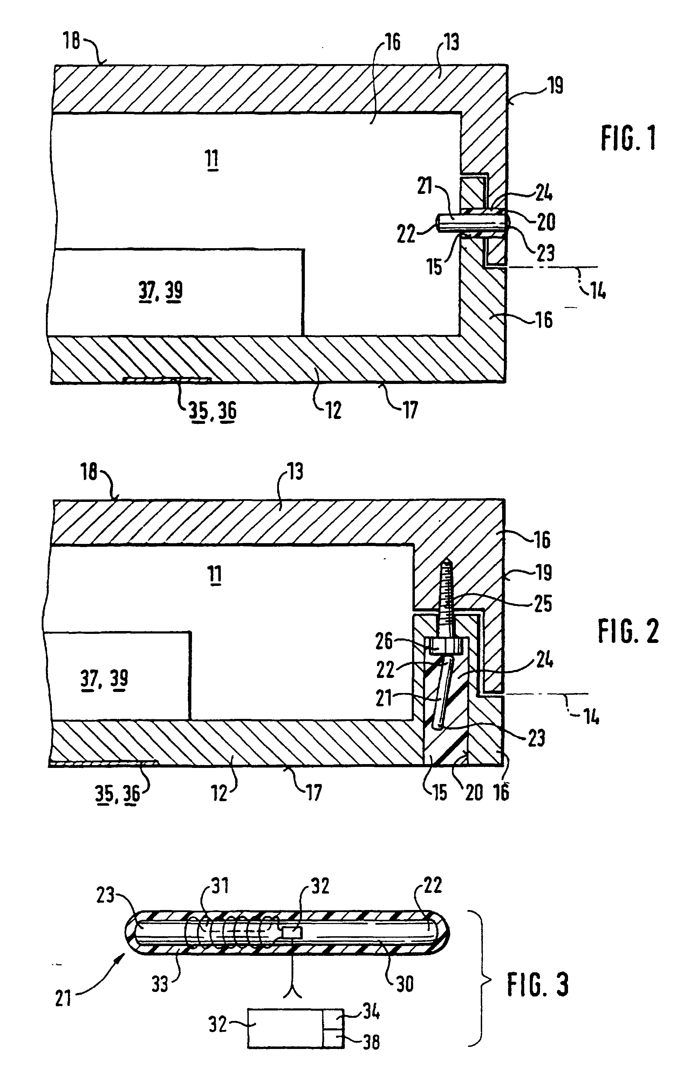

Die in Fig. 1 und Fig. 2 der Zeichnung in abgebrochener Längsschnitt-Darstellung zweiteilig zusammengesetzt skizzierten Gehäuse 11 weisen jeweils einander haubenförmig übergreifende Bodenteile 12 und Deckelteile 13 mit jeweils deren Wandungsquerschnitte abgestuft durchlaufender Teilungsfuge 14 auf.

Im Bereich der Überlappung zwischen Boden- und Deckelteil 12, 13 erstreckt sich ein eine Teilungsfuge 14 überquerender, eingebohrter oder eingeformter Hohlraum 15 in die Gehäuse-Wandungen 16 hinein, und zwar (Fig. 1) quer oder (Fig. 2) parallel zu den Wandungsebenen. Der Hohlraum 15 ist durch eine Öffnung 20 in einer Außenfläche 19 der Gehäuse-Wandungen 16 von außerhalb des Gehäuses 11 zugänglich. Durch diese Öffnung 20 hindurch wird nach dem Bestücken des Inneren des Gehäuses 11 mit einer Datenerfassungs- und Speicherschaltung 37 und dem Verschließen des Gehäuses 11 ein stabförmiger Transponder 21 so tief in den gestreckten Hohlraum 15 hineingeschoben, dass seine Stirnenden 22, 23 beiderseits der überbrückten Teilungsfuge 14 und somit im jeweiligen Gehäuse-Teil 12 bzw. 13 zu liegen kommen. Der dort z.B. reibschlüssig oder vorzugsweise mittels einer Vergussmasse 24 festgelegte Transponder 11 wirkt deshalb als Verriegelung zwischen den beiden bei geschlossenem Gehäuse 11 aneinander zu sichernden Gehäuse-Teilen 12, 13 und verhindert deshalb ein Wieder-Öffnen - es sei denn, der Transponder 21 wird aus seiner Fugen-Überbrückung 14 wieder entfernt.

Wenn das Gehäuse 11 gemäß Fig. 2 bereits mit Hohlräumen 15 in Form von Schraubenkanälen zum Einsenken von die Teilungsfuge 14 überbrückenden Spannschrauben 25 für die Verbindung der beiden Gehäuse-Teile 12, 13 miteinander, ausgestattet ist und der Kopf einer Spannschraube 25 dabei wie zeichnerisch dargestellt (bezogen auf die Öffnung 20) jenseits der Teilungsfuge 14 liegt, dann kann ein solcher Schraubenkanal vorteilhaft zugleich als der Aufnahme-Hohlraum 15 für den Plomben-Transponder 21 dienen, weil der dann hinter dem Schraubenkopf 26 (also zwischen diesem und der Öffnung 20) in dem Hohlraum 15 aufnehmbar ist. So ist durch den dort mittels der Vergussmasse 24 hermetisch festgelegten Transponder 21 zusätzlich der Zugang zur Gehäuse-Spannschraube 25 verwehrt. Das Gehäuse 11 kann nun schon deshalb nicht mehr - ohne von Gewaltanwendung herrührende und äußerlich sichtbare Beschädigung - wieder geöffnet werden, weil wenigstens eine der Boden- und Deckelteil 12, 13 miteinander zum geschlossenen Gehäuse 11 verbindenden Spannschrauben 25 nach dem Einkleben des Sicherungs-Transponders 21 nicht mehr zum Herausschrauben zugänglich ist.

Bei dem Transponder 21 handelt es sich um einen leicht zerbrechlichen Ferritstab 30 (Fig.3) als Träger für eine Spule 31 einer magnetischen Radiofrequenz- oder Mittelfrequenz-Antenne und für einen an die Spule 31 angeschlossenen elektronischen Speicher-Schaltkreis 32 in Form eines Halbleiter-Chips, wie er als solcher aus der Technologie der Tansponder-Identifikation bekannt ist, umgeben von einer dünnen Epoxidharz-Hülle 33. Solch ein Transponder 21 wird nun, als Plombe dienend, in der beschriebenen Verriegelungs-Lage, also z.B. gemäß Fig. 1 die Teilungsfuge 14 überbrückend, in seinem Aufnahme-Hohlraum 15 gemäß Fig. 1 an beiden Gehäuse-Teilen 12, 13 oder gemäß Fig. 2 an dem Gehäuseteil 12 hermetisch festgelegt, vorzugsweise wie erwähnt mittels einer Vergussmasse 24 verklebt. Für eine praktisch nicht wieder lösbare Einbindung des Transponders 21 wird eine Vergussmasse 24 auf Zweikomponenten-Basis bevorzugt, von der eine Komponente sich chemisch innig mit der Epoxidharz-Hülle 33 des Transponders 21 und die andere Komponente sich chemisch innig mit dem z.B. duroplastischen Kunststoff der Gehäuseteil-Wandungen 16 in der Umgebung des Hohlraumes 15 verbindet. Dadurch ist sichergestellt, dass der Transponder 21 weder mechanisch (etwa durch den Versuch, den Hohlraum 15 durch seine Öffnung 20 hindurch aufzubohren) noch chemisch (etwa durch den Versuch, die Vergussmasse 24 herauszulösen) aus seiner Verriegelungslage im Hohlraum 15 gelöst und wieder entnommen werden kann, ohne ihn dabei zu zerstören und das Material in der Umgebung des Hohlraumes 15 irreversibel sowie in der Umgebung der Öffnung 20 von außen deutlich sichtbar zu beschädigen.

Jeder Transponder 21 ist durch eine im Zuge seiner Herstellung nur einmal an einen Speicher-Chip 32 vergebene Identnummer 34 eindeutig identifiziert. Das Gehäuse 11 andererseits wird im Zuge seiner Fertigung durch eine fortlaufende Seriennummer 35 auf einem Typenschild 36 individualisiert. Nach der Endprüfung der Bestückung des Gehäuses 11 mit einer elektronischen Schaltung 37 o.dgl. wird das Gehäuse 11 mittels des Transponders 21 verriegelt und dann die visuell oder optoelektronisch erfasste aktuelle Serien nummer 35 der gleichzeitig am selben Gehäuse 11 induktiv ausgelesenen Transpönder-Identnummer 34 in einer Tabelle zugeordnet. Diese Zuordnung, die sich wie erläutert während der Lebenszeit des Geräte-Gehäuses 11 ohne Zerstörung des Transponders 21 und damit auch des Gehäuses 11 ohnehin nicht mehr ändern lässt, wird als unveränderbare Individualisierung des Gehäuses 11 in einen Speicher der elektronischen Schaltung 37 des Gerätes eingeschrieben sowie vor allem auch extern archiviert.

Vor dem Einsatz des Gerätes, also der in seinem Gehäuse 11 enthaltenen Schaltung 37 etwa in Form eines Messdaten-Speichers zum Erfassen von Wettkampf-Echtzeitdaten, wird an einer autorisierten Kontrollstelle wie z.B. in der Einsatzstelle beim Brieftaubensport das Gerät vorgelegt. Dort werden die Seriennummer 35 und die tatsächliche Identnummer 34 aus dem Plomben-Transponder 21 ausgelesen und in der vom Hersteller gelieferten externen Zuordnungs-Liste sowie mit der tatsächlichen Seriennummer 35 auf dem Gehäuse-Typenschild 36 verglichen. Im Zuge dieses Lese-Schreib-Vorganges wird zugleich eine nicht vorherbestimmbare Zufallszahl erzeugt und zusätzlich als nur für diesen aktuellen Einsatzfall gültige Einsatznummer 38 im Chip-Speicher 32 der Serien- und der Identnummer 35 bzw. 34 zugeordnet. Diese eingespeicherte aktuelle Zuordnung der nun drei Nummern 34, 35, 38 wird außerdem ausgelesen und für etwaige spätere Kontrollzwecke nach dem Wettbewerb extern listenmäßig festgehalten.

Jene zusätzliche Sicherungsmaßnahme in Form der Zufalls-Einsatznummer 38 für die aktuell bevorstehende Anwendung des Gerätes ist ganz besonders zuverlässig, da extern nicht manipulierbar und nicht einmal abhörbar, wenn sie nicht extern erzeugt und dann drahtlos vom Kontrollgerät (etwa von der Brieftauben-Einsatzstellenantenne) in das Gehäuse 11 übertragen wird; sondern wenn nur eine drahtlose externe Anregung zur internen Erzeugung der Zufallszahl 38 (nämlich innerhalb des Speicher-Chips 32 des Plomben-Transponders 21) geliefert wird.

Nach dem Wettkampf, wenn von der Datenerfassungs- und -speicher-Schaltung 37 im Gehäuse 11 relevante aktuelle Daten 39 wie etwa die realen Ankunftszeiten von Wettkampfteilnehmern gespeichert sind und dieses Gehäuse 11 zur Datenauswertung abgeliefert wird, dann werden die darin zwischengespeicherten Wettkampfdaten 39 vom Auswerterechner des Wettkampfgerichts, der mit der Zuordnungsliste gespeist ist, nur dann aus dem Gehäuse 11 ausgelesen und in die Siegerliste eingearbeitet, wenn die Identnummer 34 im Chip 32 des Plomben-Transponders 21 zur tabellarischen Zuordnung mit der Geräte-Seriennummer 35 noch passt und wenn außerdem die zuvor an jene Paarung aktuell vergebene Einsatz-Zufallsnummer 38 noch stimmt. Das ist die absolute Garantie, dass es sich um dasselbe und wegen unbeschädigten Transponders 21 nach wie vor verschlossen gebliebene Gehäuse 11 handelt, das zuvor der Kontrollstelle zum Einsatz in diesem aktuellen Wettkampf vorgelegt wurde; die daraus auszulesenden Wettkampfdaten 39 können nach ihrer Übernahme in das Gehäuse 11 nicht mehr manipuliert worden sein.

## Patentansprüche

1. **Verfahren zur Verwendung eines Transponders (21)** mit drahtlos auslesbarer, fester, eindeutiger Identnummer (34) **für eine** Plombe für ein **zweiteiliges** Gehäuse (11), etwa eines Mess-, Speicher- oder Anzeigegerätes, wobei in einen eine Teilungsfuge (14) des Gehäuses (11) zwischen den beiden bei geschlossenem Gehäuse (11) einander benachbarten Gehäuseteilen (12, 13) überquerenden Hohlraum (15) **der** Transponder (21) die Teilungsfuge (14) überbrückend fest **eingefügt wird, so dass der Transponder** bei einem Versuch des Öffnens des Gehäuses (11) irreversibel zerstört wird, so dass die Identnummer (34) dann nicht mehr auslesbar ist.

2. **Verfahren** nach Anspruch 1, **dadurch gekennzeichnet, dass** der **verwendete** Transponder stabförmig ausgeführt ist und in den die Teilungsfuge (14) überquerenden Hohlraum (15) **eingegossen wird,** der sich quer oder parallel zu Gehäusewandungen (16) der Gehäuseteile (12, 13) durch die Wandungen (16) erstreckt.

3. **Verfahren zur Verwendung eines Transponders (21)** mit drahtlos auslesbarer, fester, eindeutiger Identnummer (34) **für eine** Plombe für ein **zweiteiliges** Gehäuse (11), etwa eines Mess-, Speicher- oder Anzeigegerätes, mit einer die beiden Gehäuseteile (12, 13) miteinander verbindenden Spannschraube (25), wobei in einem eine Teilungsfuge (14) des Gehäuses (11) zwischen den beiden bei geschlossenem Gehäuse (11) einander benachbarten Gehäuseteilen (12, 13) überquerenden Hohlraum (15), der als ein Schraubenkanal für die Spannschraube (25) ausgebildet ist, **welche** die Teilungsfuge (14) überbrückt, **der** Transponder (21) vor dem Kopf (26) der Spannschraube (25) in dem Schraubenkanal **aufgenommen und befestigt wird, so dass der Transponder (21)** den Zugang zu der Spannschraube (25) verwehrt und bei einem Versuch, die Spannschraube zugänglich zu machen, irreversibel zerstört wird, so dass die Identnummer dann nicht mehr auslesbar ist.

4. **Verfahren** nach einem der vorhergehenden Ansprüche, **dadurch gekennzeichnet, dass** der **verwendete** Transponder (21) mit einer Mehrkomponenten-Vergussmasse (24) mit dem Gehäuse (11) **verbunden wird**, die sich sowohl mit der Transponder-Hülle (33) als auch mit dem Material des Gehäuses (11) innig verbindet.

5. **Verfahren** nach einem der vorhergehenden Ansprüche, **dadurch gekennzeichnet, dass** der **verwendete** Transponder (21) mit einem Speicher-Chip (32) für die **drahtlos auslesbare**, feste, eindeutige Identnummer (34) ausgestattet ist, die fertigungsseitig in Zuordnung zu einer fortlaufenden Geräte-Seriennummer (35) für das aktuelle Gehäuse (11) archiviert ist.

6. **Verfahren** nach Anspruch 5, **dadurch gekennzeichnet, dass** der Speicher-Chip (32) des **verwendeten** Transponders (21) einen Speicherbereich für eine von Einsatzfall zu Einsatzfali des Gerätes (11) variierende und überschreibende aktuelle Einsatznummer (38) aufweist.

7. **Verfahren** nach Anspruch 6, **dadurch gekennzeichnet, dass** die variierende Einsatznummer (38) eine von einem Zufallsgenerator erzeugte Zahl ist, die auf dem Chip (32) selbst generiert wird und von ihm zusammen mit der **drahtlos auslesbaren**, festen, eindeutigen Identnummer (34) **drahtlos** auslesbar ist.

8. **Verfahren** nach einem der vorhergehenden Ansprüche, **dadurch gekennzeichnet, dass** der Transponder ein passiver elektronischer Mittelfrequenz-Transponder ist.

9. **Zweiteiliges** Gehäuse (11), etwa eines Mess-, Speicher- oder Anzeigegerätes, mit einer Plombe, **dadurch gekennzeichnet, dass** in einen eine Teilungsfuge (14) des Gehäuses (11) zwischen den beiden bei geschlossenem Gehäuse (11) einander benachbarten Gehäuseteilen (12, 13) überquerenden Hohlraum (15) ein Transponder (21) mit drahtlos auslesbarer, fester, eindeutiger Identnummer (34) die Teilungsfuge (14) überbrückend fest eingefügt ist und bei einem Versuch des Öffnens des Gehäuses (11) dieser Transponder (21) irreversibel zerstört wird, so dass die Identnummer (34) dann nicht mehr auslesbar ist.

10. Gehäuse nach Anspruch 9, **dadurch gekennzeichnet, dass** der Transponder (21) stabförmig ausgeführt ist und in den die Teilungsfuge (14) überquerenden Hohlraum (15) eingießbar ist, der sich quer oder parallel zu Gehäusewandungen (16) der Gehäuseteile (12, 13) durch die Wandungen (16) erstreckt.

11. **Zweiteiliges** Gehäuse (11), etwa eines Mess-, Speicher- oder Anzeigegerätes, mit einer Plombe sowie einer die beiden Gehäuseteile (12, 13) miteinander verbindenden Spannschraube (25), **dadurch gekennzeichnet, dass** in einem eine Teilungsfuge (14) des Gehäuses (11) zwischen den beiden bei geschlossenem Gehäuse (11) einander benachbarten Gehäuseteilen (12, 13) überquerenden Hohlraum (15), der als ein Schraubenkanal für die Spannschraube (25), welche die Teilungsfuge (14) überbrückt, ausgebildet ist, fest vor dem Kopf (26) der Spannschraube (25) in dem Schraubenkanal ein Transponder (21) mit drahtlos auslesbarer, fester, eindeutiger Identnummer (34) aufgenommen ist, welcher somit den Zugang zu der Spannschraube (25) verwehrt und bei einem Versuch, die Spannschraube zugänglich zu machen, irreversibel zerstört wird, so dass die Identnummer dann nicht mehr auslesbar ist.

12. Gehäuse nach einem der Ansprüche 9 - 11, **dadurch gekennzeichnet, dass** der Transponder (21) mit einer Mehrkomponenten-Vergussmasse (24) mit dem Gehäuse (11) verbindbar ist, die sich sowohl mit einer Transponder-Hülle (33) als auch mit dem Material des Gehäuses (11) innig verbindet.

13. Gehäuse nach einem der Ansprüche 9-12, **dadurch gekennzeichnet, dass** der Transponder (21) mit einem Speicher-Chip (32) für die feste eindeutige Identnummer (34) ausgestattet ist, die fertigungsseitig in Zuordnung zu einer fortlaufenden Geräte-Seriennummer (35) für das aktuelle Gehäuse (11) archiviert ist.

14. Gehäuse nach Anspruch 13, **dadurch gekennzeichnet, dass** der Speicher-Chip (32) des Transponders (21) einen Speicherbereich für eine von Einsatzfall zu Einsatzfall des Gerätes (11) variierende und überschreibende aktuelle Einsatznummer (38) aufweist.

15. Gehäuse nach Anspruch 14, **dadurch gekennzeichnet, dass** die variierende Einsatznummer (38) eine von einem Zufallsgenerator erzeugte Zahl ist, die auf dem Chip (32) selbst generiert wird und von ihm zusammen mit der drahtlos auslesbaren, festen, eindeutigen Identnummer (34) drahtlos auslesbar ist.

16. Gehäuse nach einem der Ansprüche 9 - 15, **dadurch gekennzeichnet, dass** der Transponder ein passiver elektronischer Mittelfrequenz-Transponder ist.

## Claims

1. A method for use of a transponder (21) with a fixed, unequivocal identity number (34) which can be read out wirelessly, for a seal for a two-part housing (11), for example of a measuring, storage or display apparatus, wherein the transponder (21) is securely inserted into a cavity (15) which crosses over a dividing join (14) between the two parts (12, 13) of the housing (11) which are adjacent to each other when the housing (11) is closed so that the transponder spans said dividing join (14), so that at any attempt to open the housing the transponder is irreversibly destroyed (11), causing the identity number (34) to become unreadable.

2. The method according to claim 1, **characterized in that** the transponder used is bar-shaped and is cast into the cavity (15) which crosses the dividing join (14) and which extends transversely or parallel to housing walls (16) of the housing parts (12, 13) and through the walls (16).

3. A method for use of a transponder (21) with a fixed, unequivocal identity number (34) which can be read out wirelessly, for a seal for a two-part housing (11), for example of a measuring, storage or display apparatus, having a clamping screw (25) that joins together the two housing parts (12, 13), wherein in a cavity (15) which crosses over a dividing join (14) between the two parts (12, 13) of the housing (11) which are adjacent to each other when the housing (11) is closed, which cavity serves as a screw channel for the clamping screw (25) which spans the dividing join (14), the transponder (21) is received and secured in the screw channel in front of the head (26) of the clamping screw (25) so that the transponder (21) bars access to the clamping screw (25) and is irreversibly destroyed at any attempt to gain access to the clamping screw, causing the identity number to become unreadable.

4. The method according to any of the preceding claims, **characterized in that** the transponder (21) being used is bonded to the housing (11) with a multi-component casting material (24) which intimately bonds both with the transponder shell (33) and with the material of the housing (11).

5. The method according to any of the preceding claims, **characterized in that** the transponder (21) being used is provided with a memory chip (32) for the fixed, unequivocal identity number (34), which can be read out wirelessly and which upon production is archived in association with a consecutive apparatus serial number (35) for the current housing (11).

6. The method according to claim 5, **characterized in that** the memory chip (32) of the transponder (21) being used has a memory region for a current use number (38) which varies from one situation of use of the apparatus (11) to another and which can be overwritten.

7. The method according to claim 6, **characterized in that** the varying use number (38) is a number which is produced by a random generator and which is generated on the chip (32) itself and which can be read out wirelessly from the chip together with the fixed, unequivocal identity number (34) which can be read out wirelessly.

8. The method according to any of the preceding claims, **characterized in that** the transponder is a passive electronic medium-frequency transponder.

9. A two-part housing (11), for example of a measuring, storage or display apparatus, having a seal, **characterized in that** a transponder (21) with a fixed, unequivocal identity number (34) which can be read out wirelessly, is securely inserted into a cavity (15) which crosses over a dividing join (14) between the two parts (12, 13) of the housing which are adjacent to each other when the housing (11) is closed so that the transponder spans said dividing join (14), so that at any attempt to open the housing (11) this transponder (21) is irreversibly destroyed (11), causing the identity number (34) to become unreadable.

10. The housing according to claim 9, **characterized in that** the transponder (21) is bar-shaped and can be cast into the cavity (15) which crosses the dividing join (14) and which extends transversely or parallel to housing walls (16) of the housing parts (12, 13) and through the walls (16).

11. A two-part housing (11), for example of a measuring, storage or display apparatus, with a seal and with a clamping screw (25) that joins together the two housing parts (12, 13), **characterized in that** in a cavity (15) which crosses over a dividing join (14) between the two parts (12, 13) of the housing (11) which are adjacent to each other when the housing (11) is closed, which cavity serves as a screw channel for the clamping screw (25) which spans the dividing join (14), a transponder (21) with a fixed, unequivocal identity number (34) which can be read out wirelessly is securely received in the screw channel in front of the head (26) of the clamping screw (25), which transponder (21) thus bars access to the clamping screw (25) and is irreversibly destroyed at any attempt to gain access to the clamping screw, causing the identity number to become unreadable.

12. The housing according to any of claims 9 - 11, **characterized in that** the transponder (21) is bonded to the housing (11) with a multi-component casting material (24) which intimately bonds both with the transponder shell (33) and with the material of the housing (11).

13. The housing according to one of claims 9 - 12, **characterized in that** the transponder (21) is provided with a memory chip (32) for the fixed, unequivocal identity number (34), which upon production is archived in association with a consecutive apparatus serial number (35) for the current housing (11).

14. The housing according to claim 13, **characterized in that** the memory chip (32) of the transponder (21) has a memory region for a current use number (38) which varies from one situation of use of the apparatus (11) to another and which can be overwritten.

15. The housing according to claim 14, **characterized in that** the varying use number (38) is a number which is produced by a random generator and which is generated on the chip (32) itself and which can be read out wirelessly from the chip together with the fixed, unequivocal identity number (34) which can be read out wirelessly.

16. The housing according to any of claims 9 - 15, **characterized in that** the transponder is a passive electronic medium-frequency transponder.

## Revendications

1. Procédé pour l'utilisation d'un transpondeur (21) comprenant un numéro d'identification (34) fixe, clairement défini et lisible sans fil pour un plomb prévu dans un boîtier en deux parts (11), destiné par exemple à un appareil de mesure, de mémoire ou d'affichage, dans lequel dans un espace creux (15) traversant un joint de séparation (14) du boîtier (11) lorsque le boîtier (11) est fermé, entre les deux parts (12, 13) juxtaposés du boîtier, le transpondeur (21) est solidement fixé de manière à shunter ledit joint de séparation (14), assurant ainsi que lorsque le boîtier (11) est ouvert le transpondeur est irréversiblement détruit et le numéro d'identification (34) n'est plus lisible.

2. Procédé suivant la revendication 1,
**caractérisé en ce que**
le transpondeur utilisé a la forme d'une barre et est moulé dans l'espace (15) traversant le joint de séparation (14) s'étendant en direction transversale ou parallèle par rapport aux parois du boîtier (16) des parts du boîtier (12, 13) à travers les parois (16).

3. Procédé pour l'utilisation d'un transpondeur (21) comprenant un numéro d'identification (34) fixe, clairement défini et lisible sans fil pour un plomb prévu dans un boîtier (11) en deux parts, destiné par exemple à un appareil de mesure, de mémoire ou d'affichage, incluant une vis de serrage (25) connectant les deux parts (12, 13) du boîtier, dans lequel dans un espace creux (15) traversant un joint de séparation (14) du boîtier (11) lorsque le boîtier (11) est fermé entre les deux parts (12, 13) juxtaposés du boîtier, et ayant la forme d'un canal de vis pour la vis de serrage (25), traversant le joint de séparation (14) le transpondeur (21) est situé devant la tête (26) de la vis de serrage (25) et introduit et fixé de telle sorte dans le canal de vis que le transpondeur (21) empêche l'accès à la vis de serrage (25), assurant ainsi que lorsqu'il est essayé de rendre la vis de serrage accessible le transpondeur est irréversiblement détruit et le numéro d'identification n'est plus lisible.

4. Procédé suivant l'une des revendications précédentes,
**caractérisé en que**
le transpondeur (21) utilisé est connecté au moyen d'une masse de scellement (24) à plusieures composantes au boîtier (11), qui épouse par ailleurs de manière intime aussi bien l'enveloppe (33) du transpondeur que le matériau du boîtier (11).

5. Procédé suivant l'une des revendications précédentes,
**caractérisé en que**
le transpondeur (21) utilisé est équipé d'un chip de mémoire (32) pour le numéro d'identification (34) fixe, clairement défini et lisible sans fil, qui est archivé au cours de la fabrication par rapport à un numéro actuel de série (35) continu du boîtier (11).

6. Procédé suivant la revendication 5,
**caractérisé en ce que**
le chip de mémoire (32) du transpondeur (21) utilisé comprend un secteur de mémoire pour mémoriser un numéro d'utilisation (38) actuel variable et remplaçable conformément à l'utilisation prévue du dispositif (11).

7. Procédé suivant la revendication 6,
**caractérisé en ce que**
le numéro d'utilisation (38) variable est un numéro généré par un générateur de nombres aléatoires généré sur le chip (32) lui-même et qui en est lisible sans fil conjointement avec le numéro d'identification (34) fixe, clairement défini et lisible sans fil.

8. Procédé suivant l'une des revendications précédentes,
**caractérisé en que**
ce transpondeur est un transpondeur passif électronique à moyenne fréquence.

9. Boîtier (11) en deux parts, destiné par exemple à un appareil de mesure, de mémorisation ou d'affichage et comprenant un plomb,
**caractérisé en ce que**
dans un espace creux (15) traversant un joint de séparation (14) du boîtier (11) lorsque le boîtier (11) est fermé, entre les deux parts (12, 13) juxtaposés du boîtier, un transpondeur (21) incluant un numéro d'identification (34) fixe, clairement défini et lisible sans fil est solidement fixé de manière à shunter ledit joint de séparation (14), assurant ainsi que lorsque le boîtier (11) est ouvert ce transpondeur (21) est irréversiblement détruit et le numéro d'identification (34) n'est plus lisible.

10. Boîtier suivant la revendication 9,
**caractérisé en ce que**
le transpondeur (21) utilisé a la forme d'une barre et est moulé dans l'espace (15) traversant le joint de séparation (14) qui s'étend en direction transversale ou parallèle par rapport aux parois (16) du boîtier des parts (12, 13) du boîtier à travers les parois (16).

11. Boîtier (11) en deux parts, destiné par exemple à un appareil de mesure, de mémorisation ou d'affichage comprenant un plomb et incluant également une vis de serrage (25) connectant les deux parts (12, 13) du boîtier,
**caractérisé en ce que**
dans un espace creux (15) traversant un joint de séparation (14) du boîtier (11) lorsque le boîtier (11) est fermé, entre les deux parts (12, 13) juxtaposés du boîtier, et formant un canal de vis pour la vis de serrage (25) shuntant le joint de séparation (14), un transpondeur (21) incluant un numéro d'identification (34) fixe, clairement défini et lisible sans fil, est solidement fixé devant la tête (26) de la vis de serrage (25) dans le canal de vis, empêchant ainsi l'accès à la vis de serrage (25) lors d'une tentative de rendre cette vis de serrage accessible ce transpondeur est irréversiblement détruit, assurant ainsi que et le numéro d'identification n'est plus lisible.

12. Boîtier suivant l'une des revendications 9 à 11,
**caractérisé en ce que**
le transpondeur (21) utilisé est connecté au moyen d'une masse de scellement (24) à composantes multiples au boîtier (11) qui épouse de manière intime aussi bien l'enveloppe (33) du transpondeur que le matériau du boîtier (11).

13. Boîtier suivant l'une des revendications 9 à 12,
**caractérisé en ce que**
le transpondeur (21) est équipé d'un chip de mémoire (32) du numéro d'identification (34) fixe, clairement défini qui est archivé au cours de la fabrication par rapport à un numéro de série courant (35) du boîtier (11) courant.

14. Boîtier suivant la revendication 13,
**caractérisé en ce que**
le chip de mémoire (32) du transpondeur (21) comprend un secteur de mémorisation pour un numéro courant d'utilisation (38) variable et remplaçable correspondant à l'utilisation prévue du dispositif (11).

15. Boîtier suivant la revendication 14,
**caractérisé en ce que**
le numéro d'utilisation (38) variable est un numéro généré par un générateur de nombres aléatoires généré sur le chip (32) lui-même et qui en est lisible sans fil conjointement avec le numéro d'identification (34) fixe, clairement défini.

16. Boîtier suivant l'une des revendications 9 à 15,
**caractérisé en ce que**
le transpondeur est un transpondeur électronique passif à moyenne fréquence.
